# EUROPEAN PATENT APPLICATION

(11) **EP 4 485 703 A1**
(43) Date of publication of application: **01.01.2025**
(21) Application number: 23778785.8
(22) Date of filing: 25.01.2023
(51) Int. Cl.: H01R 13/41, G01K 7/02, H01R 13/66

(54) **THERMOCOUPLE CONNECTOR**

(30) Priority: 30.03.2022 JP 2022057069
(71) Applicant: Kabushiki Kaisha Top, Adachi-ku, Tokyo 120-0035 (JP)
(72) Inventor: MURATA Koji, Tokyo 120-0035 (JP); MIYAZAWA Yoshihiro, Tokyo 120-0035 (JP)
(74) Representative: Schön, Christoph
(86) International application number: PCT/JP2023/002168
(87) International publication number: WO 2023/188747

(57) **Abstract**

Provided is a thermocouple connector having high reliability while simplifying a configuration. Compensation wires W2+ and W2- and a terminal member 222 are electrically connected to each other by a simple configuration in which the compensation wires W2+ and W2- are disposed along a groove portion 2410 of a base body 24 and the terminal member 222 is fixedly fitted into the groove portion 2410. In addition, even when the terminal member 222 is inserted into and extracted from the connection terminal of the device, the electrical connection between the compensation wires W2+ and W2- and the terminal member 222 can be stably maintained.

## Description

### Technical Field

The present invention relates to a thermocouple connector used in a high-frequency electrode needle having a temperature measurement function, which can cauterize a specific tissue by discharging a high-frequency current and/or performing a nerve block by a pulse high frequency and/or administration of anesthetic solution from a needle tip portion.

### Background Art

A balloon catheter configured to prevent disconnection of a wire connected to a temperature sensor has been proposed (for example, see Patent Literature 1). Specifically, a copper wire for supplying a high-frequency voltage of a high-frequency generator to an electrode for high-frequency heating is connected to one end of a thermocouple sensor. A coil that separates the high-frequency signal is connected to the other end of the thermocouple sensor. The coil is incorporated in a catheter body. The copper wire and the coil are electrically connected to a thermometer.

With this configuration, the copper wire for the electrode is used as one wire of the thermocouple sensor, and a high frequency from a high-frequency generator is blocked by the coil connected to the other end of the thermocouple sensor, and a direct current temperature signal of the thermocouple sensor is output via the copper wire and the coil.

### Citation List

### Patent Literature

Patent Literature 1: Japanese Patent Application Laid-Open No. H05-293183

### Summary of Invention

### Technical Problem

However, from the viewpoint of saving manufacturing cost or the like, there is room for improvement in a configuration of the thermocouple connector used when a compensation wire electrically connected to the thermocouple wire is electrically connected to a high-frequency power supply device having a temperature measurement function.

Therefore, an object of the present invention is to provide a thermocouple connector having high reliability while simplifying a configuration.

### Solution to Problem

A thermocouple connector of the present invention includes a housing, an insulating base body accommodated in the housing, a pair of terminal members exposed to an external space of the housing, and a pair of compensation wires, in which the terminal member includes a conductive member, and is fixed to the base body by being partially fitted into a groove portion formed in the base body, and the compensation wire is fixed to the base body by being interposed between the terminal member and a wall portion that defines the groove portion in the base body, and is electrically connected to the terminal member.

With the thermocouple connector of the configuration, the compensation wires and the terminal member are electrically connected to each other by a simple configuration in which the compensation wires are disposed along the groove portion of the base body and the terminal member is fixedly fitted into the groove portion. In addition, even when the terminal member is inserted into and removed from a connection terminal of the device, electrical connection between the compensation wires and the terminal member can be stably maintained. As a result, the manufacturing cost of the thermocouple connector is reduced, and the reliability of the product is improved.

In the thermocouple connector of the configuration, it is preferable that the groove portion includes a first groove portion extending in a first direction in the base body and having one end portion that is open in the first direction, and a second groove portion extending in a second direction different from the first direction, and the terminal member includes a first base portion partially protruding from the housing and partially fitted into first groove portion, and a second base portion fitted into the second groove portion.

With the thermocouple connector of the configuration, a situation in which the terminal member is displaced with respect to the base body in the first direction and/or the second direction along the groove portion can be reliably prevented. As a result, the manufacturing cost of the thermocouple connector is reduced, and the reliability of the product is improved.

In the thermocouple connector of the configuration, it is preferable that the first groove portion is open in the first direction at the other end portion of the first groove portion that is opposite to the one end portion, and the compensation wire is disposed in the first groove portion such that the compensation wire is guided from the other end portion and extends toward the one end portion.

With the thermocouple connector of the configuration, it is possible to facilitate work of disposing the compensation wires along the first groove portion. As a result, the manufacturing cost of the thermocouple connector is reduced, and the reliability of the product is improved.

In the thermocouple connector of the configuration, it is preferable that a width of a part of the terminal member fitted into the groove portion is greater by a value within a range of 0.1 mm to 0.3 mm than a depth of the groove portion.

With the thermocouple connector of the configuration, it is possible to make a worker easily recognize appropriateness of an assembling work of the terminal member and the base body in accordance with whether or not a part of the terminal member fitted into the groove portion slightly (by a difference between the width of the part and the depth of the groove portion) protrudes from the groove portion. As a result, the manufacturing cost of the thermocouple connector is reduced, and the reliability of the product is improved.

In the thermocouple connector of the configuration, it is preferable that a cutout portion is formed in the base body, and the compensation wire led out from the groove portion is fixed to the base body while being bitten into the cutout portion.

With the thermocouple connector of the configuration, it is possible to reliably avoid a free end portion of the compensation wires from being disposed inside the housing in an unexpected form, resulting in the electrical conduction between the compensation wires and the terminal member that needs to be essentially and electrically disconnected. As a result, the manufacturing cost of the thermocouple connector is reduced, and the reliability of the product is improved.

In the thermocouple connector of the configuration, it is preferable that the compensation wire is terminated at a position of the cutout portion where the compensation wire is bitten at the base body.

With the thermocouple connector of the configuration, it is possible to reliably avoid a free end portion of the compensation wires from being disposed inside the housing in an unexpected form, resulting in the electrical conduction between the compensation wires and the terminal member that needs to be essentially and electrically disconnected. As a result, the manufacturing cost of the thermocouple connector is reduced, and the reliability of the product is improved.

### Brief Description of Drawings

FIG. 1 is a configuration explanatory view of a thermocouple connector as a first embodiment of the present invention.
FIG. 2 is a side view of a thermocouple connector from which a housing is omitted.
FIG. 3 is a plan view of the thermocouple connector from which the housing is omitted.
FIG. 4 is a front view of the thermocouple connector from which the housing is omitted.
FIG. 5 is a configuration explanatory view of a thermocouple connector as a second embodiment of the present invention.
FIG. 6 is a configuration explanatory view of a thermocouple connector as a third embodiment of the present invention.

### Description of Embodiments

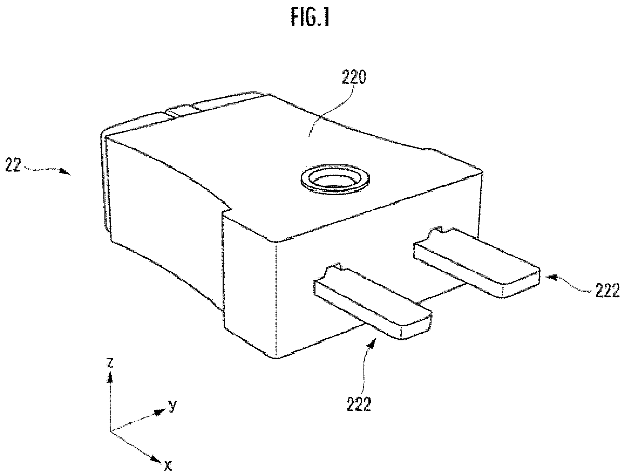

The configuration of a thermocouple connector 22 as a first embodiment of the present invention will be described with reference to FIGS. 1 to 4. For convenience of description of the configuration of the thermocouple connector 22, a three-dimensional orthogonal coordinate system (x, y, z) illustrated in the drawings is used. The x-axis positive direction (+x direction) is defined as a front direction, the x-axis negative direction (-x direction) is defined as a rear direction, the y-axis positive direction (+y direction) is defined as a left direction, the y-axis negative direction (-y direction) is defined as a right direction, the z-axis positive direction (+z direction) is defined as an upward direction, and the z-axis negative direction (-z direction) is defined as a downward direction.

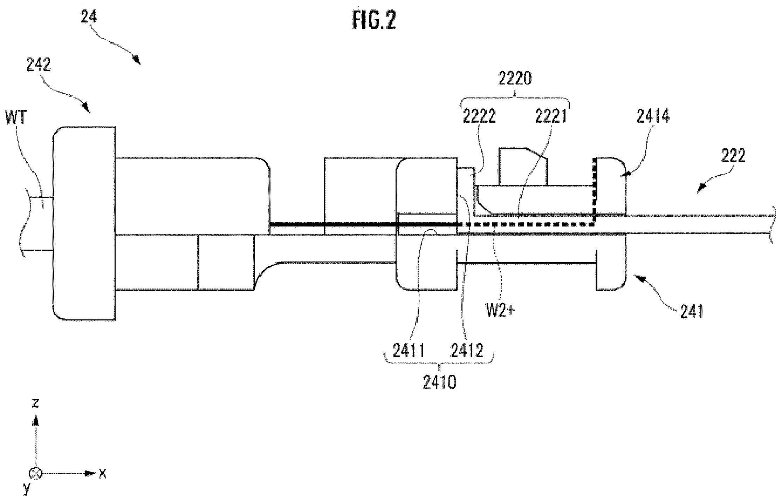

As illustrated in FIG. 1, the thermocouple connector 22 has a housing 220 and a pair of terminal members 222. The thermocouple connector 22 includes a base body 24 and a pair of compensation wires W2+ and W2- illustrated in FIGS. 2 to 4. The base body 24 is accommodated in the housing 220. The pair of terminal members 222 are supported by the base body 24. The pair of terminal members 222 are inserted into a terminal receiving portion having a high-frequency power supply device (not illustrated) having a temperature measurement function to constitute reference temperature contacts electrically connected to the device (particularly, a temperature measurement device).

One compensation wire W2+ is formed of, for example, a chromel wire (for example, cp0.1 mm). The other compensation wire W2- is formed of, for example, an alumel wire (for example, ϕ0.1 mm). One compensation wire W2+ may be formed of a copper wire (for example, ϕ0.1 mm), and the other compensation wire W2- may be formed of a constantan wire (for example, ϕ0.1 mm). The compensation wires W2+ and W2-may be covered with an insulating coating layer except for a portion that constitutes an electrical contact.

As illustrated in FIG. 1, the housing 220 has an exterior shape in which a substantially rectangular columnar housing front portion, in which a front-rear direction is a short side direction, a left-right direction is a long side direction, and an upward-downward direction is a height direction, and a substantially trapezoidal columnar housing rear portion, in which the upward-downward direction is a height direction and both side surfaces are concavely curved, are combined continuously in front and rear. As illustrated in FIG. 1, each of the pair of terminal members 222 protrudes in the front direction from each of the positions spaced apart in the left-right direction at a front end portion of the housing 220, and is exposed to the external space of the housing 220. Each of the pair of terminal members 222 is formed in a substantially rectangular plate shape in which a front-rear direction is a long side direction, a left-right direction is a short side direction, and an upward-downward direction is a thickness direction.

As illustrated in FIGS. 2 to 4, the base body 24 has a base body front portion 241, a base body intermediate portion 240, and a base body rear portion 242 that are integrally formed to be continuous in front and rear. The groove portions 2410 are formed in a left side and a right side of a substantially rectangular parallelepiped-shaped base body front portion 241, respectively (see FIG. 2). The groove portion includes a first groove portion 2411 and a second groove portion 2412. The first groove portion 2411 extends linearly in the front-rear direction (corresponding to a "first direction") at an intermediate portion of the base body front portion 241 in the upward-downward direction, and is open at both the front and rear end portions (see FIG. 2). The second groove portion 2412 extends from an intermediate position close to a rear side of the first groove portion 2411 in the upward direction (corresponding to a "second direction"), and is open at the upper end portion (see FIG. 2). An angle formed by the first direction and the second direction is approximately 90°, but the groove portion 2410 may be formed in the base body front portion 241 such that the angle formed by the first direction and the second direction is an acute angle such as 45° or 60° or an obtuse angle such as 105° or 120°.

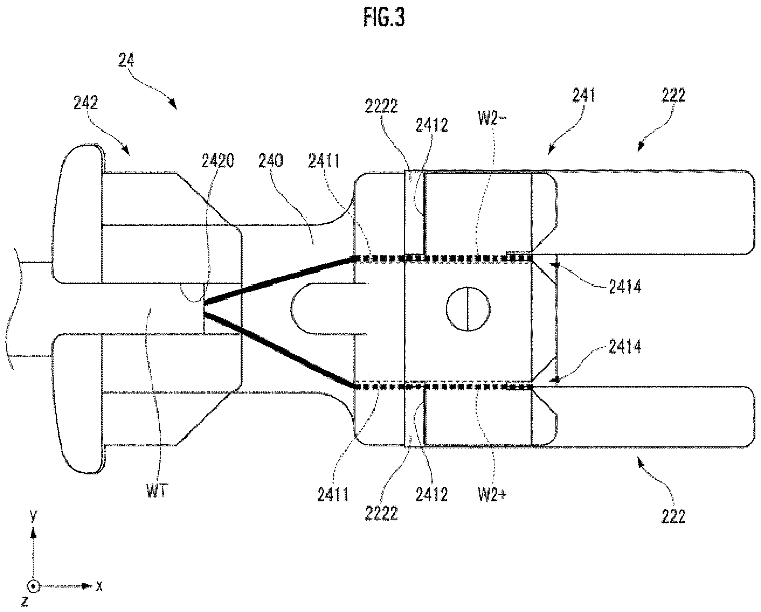

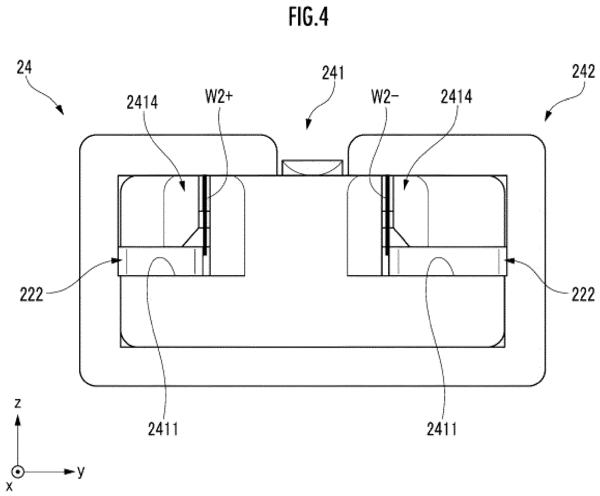

A pair of cutout portions 2414 that are recessed in a substantially triangular columnar shape while extending in the upward-downward direction are formed in a front end portion of the base body front portion 241 (see FIGS. 3 and 4). A valley bottom portion of the cutout portion 2414 and a top side portion of the triangular column are disposed at a position substantially the same as a bottom wall portion (a wall portion substantially perpendicular to the left-right direction) that defines the first groove portion 2411 in the left-right direction (see FIGS. 3 and 4).

In the base body rear portion 242, a tube groove 2420, which extends in the front-rear direction at a central portion, is open in the upward direction, and is open to the front end portion and the rear end portion, is formed (see FIG. 3).

The pair of terminal members 222 are fitted into the pair of groove portions 2410, respectively, and are thus fixed to the base body 24. As illustrated in FIG. 2, a conductive member 2220 includes a substantially rectangular plate-shaped first base portion 2221 extending in the front-rear direction and a substantially rectangular plate-shaped second base portion 2222 extending continuously in the upward direction from a rear end portion of the first base portion 2221. That is, the conductive member 2220 is formed in a plate shape that is bent in a substantially L-shape. As described above, when the groove portion 2410 is formed in the base body front portion 241 such that the angle formed by the first direction and the second direction is an acute angle such as 45° or 60° or an obtuse angle such as 105° or 120°, an angle formed by the first base portion 2221 and the second base portion 2222 may be changed in various ways such that the conductive member 2220 can be inserted into the groove portion 2410 on the outside in the left-right direction.

A rear portion of the first base portion 2221 is fitted into the first groove portion 2411 of the base body front portion 241 (see FIG. 2). A front portion of the first base portion 2221 extends forward from a front end portion of the first groove portion 2411 and protrudes into the external space of the housing 220 (see FIG. 1). A thickness (plate thickness) of the first base portion 2221 in the upward-downward direction and an interval (width) of the first groove portion 2411 in the upward-downward direction are designed to prevent the first base portion 2221 from being displaced in the upward-downward direction when the first base portion 2221 is fitted into the first groove portion 2411 (see FIG. 2). When the first base portion 2221 is fitted into the first groove portion 2411, a width (plate width) of the first base portion 2221 in the left-right direction is designed to be larger than a depth (thickness) of the first groove portion 2411 in the left-right direction, for example, within a range of 0.1 to 0.5 mm and preferably within a range of 0.1 to 0.3 mm, such that the fitted part of the first base portion 2221 slightly protrudes from the first groove portion 2411 as a whole (see FIG. 3). The width (plate width) of the first base portion 2221 in the left-right direction may be smaller than the depth (thickness) of the first groove portion 2411 in the left-right direction.

A lower portion of the second base portion 2222 is fitted into the second groove portion 2412 of the base body front portion 241 (see FIG. 2). A thickness (plate thickness) of the second base portion 2222 in the front-rear direction and an interval (width) of the second groove portion 2412 in the front-rear direction are designed to prevent the second base portion 2222 from being displaced in the front-rear direction when the second base portion 2222 is fitted into the second groove portion 2412 (see FIG. 2). When the second base portion 2222 is fitted into the second groove portion 2412, a width (plate width) of the second base portion 2222 in the left-right direction is designed to be larger than a depth (thickness) of the second groove portion 2412 in the left-right direction, for example, within a range of 0.1 to 0.5 mm and preferably within a range of 0.1 to 0.3 mm, such that the fitted part of the second base portion 2222 slightly protrudes from the second groove portion 2412 as a whole (see FIG. 3). The width (plate width) of the second base portion 2222 in the left-right direction may be smaller than the depth (thickness) of the second groove portion 2412 in the left-right direction.

Each of the pair of compensation wires W2+ and W2- is accommodated in a flexible insulating wiring tube WT. The wiring tube WT is fixedly fitted into the tube groove 2420 of the base body rear portion 242 (see FIG. 3). Each of the pair of compensation wires W2+ and W2- is electrically connected to each of a pair of thermocouple wires constituting a thermocouple provided in a tip end portion of a high-frequency electrode needle having a temperature measurement function (not illustrated).

Each of the pair of compensation wires W2+ and W2- is disposed to extend from the front end portion of the wiring tube WT in the front direction, to extend along a wall portion (for example, the bottom wall portion) of the first groove portion 2411 of the base body front portion 241 (see FIGS. 2 and 3), and to extend along the valley bottom portion of the cutout portion 2414 in the upward direction (see FIGS. 3 and 4). Each of the pair of compensation wires W2+ and W2- is bitten into the base body front portion 241 at a valley bottom portion of each of the pair of cutout portions 2414, particularly, an upper end portion. Each of the pair of compensation wires W2+ and W2- is terminated at the bitten position. After the pair of compensation wires W2+ and W2- are bitten into the base body front portion 241, each of the pair of compensation wires W2+ and W2- may be cut out to form the terminal. Each of the pair of compensation wires W2+ and W2- may be terminated at a position beyond the above-described bitten position.

Each of the pair of compensation wires W2+ and W2- is fixed to the base body 24 by being interposed between the first base portion 2221 of each of the pair of terminal members 222 and the bottom wall portion of the base body front portion 241 that defines the first groove portion 2411 constituting each of the pair of groove portions 2410.

### (Other Embodiments of Present Invention)

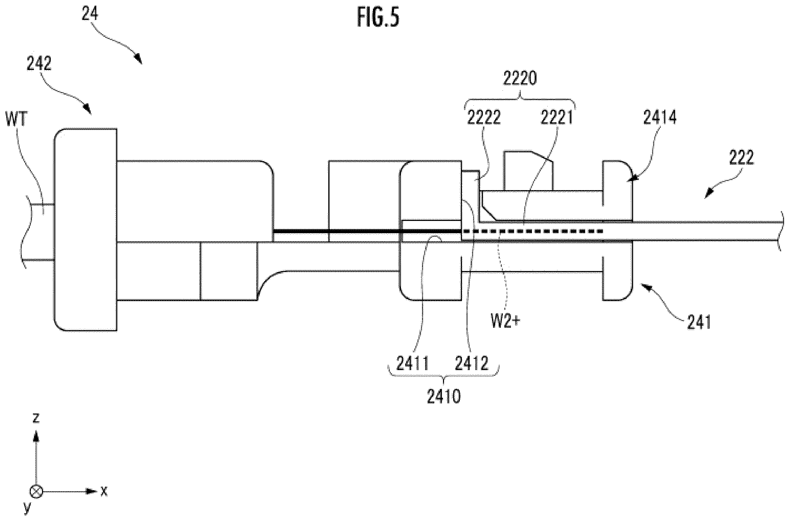

As a second embodiment, as illustrated in FIG. 5, the pair of compensation wires W2+ and W2- may extend from the rear end portion in the first groove portion 2411 of the base body front portion 241 and may be terminated in the middle or at the front end portion. In this case, the cutout portion 2414 of the base body front portion 241 may be omitted. Similarly to the first embodiment, the pair of compensation wires W2+ and W2- are fixed to the base body 24 by being interposed between each of the pair of terminal members 222 and the wall portion of the base body front portion 241 that defines each of the pair of groove portions 2410 (or the first groove portion 2411).

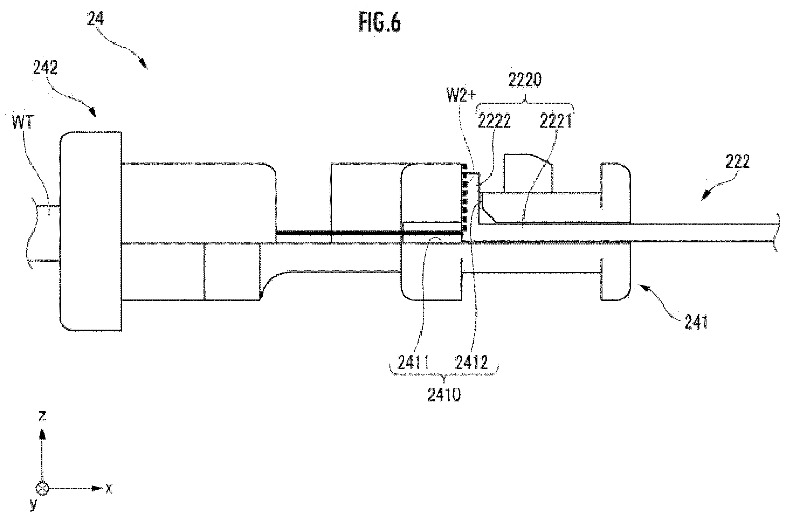

As a third embodiment, as illustrated in FIG. 6, a pair of compensation wires W2+ and W2- may extend from the rear end portion in the first groove portion 2411 of the base body front portion 241, may extend while being bent upward, and may be terminated in the middle or at the upper end portion of the second groove portion 2422. In this case, the cutout portion 2414 of the base body front portion 241 may be omitted. Similarly to the first embodiment, the pair of compensation wires W2+ and W2- are fixed to the base body 24 by being interposed between each of the pair of terminal members 222 and the wall portion of the base body front portion 241 that defines each of the pair of groove portions 2410 (or the first groove portion 2411 and the second groove portion 2412).

In the third embodiment, the cutout portion may be formed in at least the upper end portion of a bottom wall portion, a rear wall portion, and/or a front wall portion of the base body front portion 241 that define each of the pair of second groove portions 2412, and each of the pair of compensation wires W2+ and W2- may be fixed to the base body front portion 241 while being bitten into the cutout portion.

The groove portion 2410 in the base body front portion 241 may include only the first groove portion 2411, and the terminal member 222 may include only the first base portion 2221.

A high-frequency wire may be disposed in the wiring tube WT, may protrude from the front end portion of the wiring tube WT, may be disposed along one groove portion 2410 together with the one compensation wire W2+, and may be interposed between one terminal member 222 and the wall portion of the base body front portion 241 that defines one groove portion 2410 (or the first groove portion 2411), so that the high-frequency wire may be fixed to the base body 24. The high-frequency wire is formed of, for example, a copper wire (for example, cp0.18 mm) or an enameled wire.

The width (plate width) of the first base portion 2221 in the left-right direction may be partially larger than the depth (for example, by 0.1 to 0.5 mm, and preferably by 0.1 to 0.3 mm) of the first groove portion 2411 in the left-right direction. In this case, when the first base portion 2221 is fitted into the first groove portion 2411, the fitted part of the first base portion 2221 partially protrudes from the first groove portion 2411. The width (plate width) of the second base portion 2222 in the left-right direction may be partially larger than the depth (for example, by 0.1 to 0.5 mm, and preferably by 0.1 to 0.3 mm) of the second groove portion 2412 in the left-right direction. In this case, in a case where the second base portion 2222 is fitted into the second groove portion 2412, the fitted part of the second base portion 2222 partially protrudes from the second groove portion 2412.

The first groove portion 2411 may be closed at the front end portion and/or the rear end portion. For example, when the rear end portion of the first groove portion 2411 is closed rearward, the compensation wires W2+ and W2- may be wired such that the compensation wires W2+ and W2- are guided to the first groove portion 2411 after being bypassed to the outside of the closed portion of the base body front portion 241 in the left-right direction. For example, when the front end portion of the first groove portion 2411 is closed, a shape of the terminal member 222 may be formed such that the first base portion 2221 protrudes outward in the left-right direction from the front end portion of the first groove portion 2411 and then protrudes in front of the base body 24.

### Advantageous Effect of Invention

With the thermocouple connector 22 of the configuration, the compensation wires W2+ and W2- and the terminal member 222 are electrically connected to each other by a simple configuration in which the compensation wires W2+ and W2- are disposed along the groove portion 2410 of the base body 24 and the terminal member 222 is fixedly fitted into the groove portion 2410 (see FIGS. 2 to 4). In addition, even when the terminal member 222 is inserted into and extracted from the connection terminal of the device, the electrical connection between the compensation wires W2+ and W2- and the terminal member 222 can be stably maintained. As a result, the manufacturing cost of the thermocouple connector 22 is reduced, and the reliability of the product is improved.

### Description of Reference Numerals

22: thermocouple connector
220: housing
222: terminal member
2221: first base portion
2222: second base portion
24: base body
240: base body intermediate portion
241: base body front portion
242: base body rear portion
2410: groove portion
2411: first groove portion
2412: second groove portion
2414: cutout portion
W2+, W2-: compensation wire
WT: wiring tube

## Claims

1. A thermocouple connector comprising a housing, an insulating base body accommodated in the housing, a pair of terminal members exposed to an external space of the housing, and a pair of compensation wires,
wherein the terminal member is configured by a conductive member, and is fixed to the base body by being partially fitted into a groove portion formed in the base body, and
the compensation wire is fixed to the base body by being interposed between the terminal member and a wall portion that defines the groove portion in the base body, and is electrically connected to the terminal member.

2. The thermocouple connector according to claim 1,
wherein the groove portion includes a first groove portion extending in a first direction in the base body and having one end portion that is open in the first direction, and a second groove portion extending in a second direction different from the first direction, and
the terminal member includes a first base portion partially protruding from the housing and partially fitted into first groove portion, and a second base portion fitted into the second groove portion.

3. The thermocouple connector according to claim 2,
wherein the first groove portion is open in the first direction at the other end portion of the first groove portion that is opposite to the one end portion, and
the compensation wire is disposed in the first groove portion such that the compensation wire is guided from the other end portion and extends toward the one end portion.

4. The thermocouple connector according to claim 2,
wherein a width of a part of the terminal member fitted into the groove portion is greater by a value within a range of 0.1 mm to 0.3 mm than a depth of the groove portion.

5. The thermocouple connector according to claim 1,
wherein a cutout portion is formed in the base body, and the compensation wire led out from the groove portion is fixed to the base body while being bitten into the cutout portion.

6. The thermocouple connector according to claim 5,
wherein the compensation wire is terminated at a position of the cutout portion where the compensation wire is bitten at the base body.
